# EUROPÄISCHE PATENTSCHRIFT

(11) **EP 2 155 353 B1**
(45) Veröffentlichungstag und Bekanntmachung des Hinweises auf die Patenterteilung: **29.05.2013**
(21) Anmeldenummer: 08734363.8
(22) Anmeldetag: 10.03.2008
(51) Int. Cl.: B01D 29/25, B01D 29/44, B01D 29/60, B01D 29/64, B01D 29/94, B30B 9/12, B30B 9/26

(54) **PRESSSCHNECKENSEPARATOR**
PRESS SCREW SEPARATOR
SÉPARATEUR À VIS À PRESSION

(30) Priorität: 30.05.2007 DE 202007007606 U
(43) Veröffentlichungstag der Anmeldung: 24.02.2010
(73) Patentinhaber: Röhren- Und Pumpenwerk Bauer Gmbh, 8570 Voitsberg (AT)
(72) Erfinder: EICHLER, Dietrich, 01824 Königstein/Sächs.Sch. (DE)
(74) Vertreter: Hager, Thomas Johannes
(86) Internationale Anmeldenummer: PCT/DE2008/000423
(87) Internationale Veröffentlichungsnummer: WO 2008/145079

(56) Entgegenhaltungen:
- EP-A- 0 367 037
- DE-A1- 19 521 460
- DE-A1-102005 002 997
- DE-B- 1 255 084
- FR-A- 593 115
- JP-A- 6 292 995
- JP-A- 11 033 787
- JP-A- 2004 276 046
- US-A- 1 835 789

## Beschreibung

Die Erfindung betrifft einen Pressschneckenseparator zur Abscheidung fester Bestandteile aus einer feste und flüssige Bestandteile enthaltenden Trübe, wie Abwässer aus kommunalen, industriellen oder landwirtschaftlichen Betrieben, Gülle etc.. Die Erfindung betrifft insbesondere einen Pressschneckenseparator mit erhöhter Durchsatzleistung.

Bekannt ist ein Pressschneckenseparator (EP 0 367 037 B1), bei dem eine einwendelige Press- oder Förderschnecke in horizontal ausgerichteter Lage betrieben wird und ein Ringraum zwischen der Schneckenwelle bzw. -seele und einem Siebkorb in bestimmter weise dimensioniert ist. Der bekannte Pressschneckenseparator hat zwar eine eingeschränkte Durchsatzkapazität, doch befindet er sich erfolgreich in vielfachem Einsatz, insbesondere zur Verarbeitung von Güüe aus landwirtschaftlichen Betrieben. Bekannt ist ferner ein Presschneckenseparator älterer Bauart (US 3 188 942 A), der eine geneigt angeordnete Press- oder Förderschnecke mit mehr als einer Schneckenwendel aufweist. Zur Verbesserung der Entwässerungsleistung ist am Ende der Schnecke der Durchmesser der Schneckenwelle erweitert, um dadurch die Spaltweite des aussenumfänglich von einem Siebkorb begrenzten Ringraums entsprechend zu verkleinern. Dieser Ansatz erweist sich als kontraproduktiv, indem eine konischer Übergangsbereich zwischen dem ursprünglichen und dem erweiterten Durchmesser solche Auswirkungen auf einen kontinuierlichen Materialdurchsatz ausüben kann, dass die Durchsatzkapazität des bekannten Pressschneckenseparators trotz grosserem baulichen Aufwand derjenigen des Pressschneckenseparators nach der EP 0 367 037 B1 deutlich unterlegen ist.

DE 1255 084 B betrifft eine Schneckenfilterpresse, in der eine Feststoffsuspension mit Hilfe mindestens einer hohl ausgebildeten Schneckenwelle kontinuierlich entlang einer Filterfläche gegen eine Öffnung gefördert wird, aus der das Festgut kontinuierlich gegen ein auf bestimmten Druck eingestelltes, vorzugsweise kegelförmig oder ringförmig ausgebildetes Verschlußorgan ausgetragen wird.

DE 10 2005 002 997 A1 betrifft eine Schneckenfilterpresse in der eine (Feststoff)-Suspension mithilfe einer zylindrischen Schneckenwelle, die mindestens eine Wendel aufweist, kontinuierlich entlang einer gleichachsigen, zylindrischen Filterfläche, die rohrförmig die Schneckenwelle umgibt, gegen eine Öffnung gefördert und dort das Festgut kontinuierlich ausgetragen wird. Das Filtrat fließt aus dem Filtratraum zwischen Gehäuse und Filterfläche über einen Stutzen ab. Die Schneckenwelle ist einseitig gelagert und von der Lagerseite her angetrieben. Bei der Schneckenpresse ist die Schneckenwelle und das sie umgebende Filterrohr senkrecht stehend in dem Gehäuse angeordnet. Der Suspensionszufluss erfolgt am unteren Ende der Schneckenwelle und der Feststoffauswurf am oberen Ende der Schneckenwelle. Die Zuführung der Suspension erfolgt so, dass nur der untere Teil des Filterraumes teilweise befüllt wird.

DE 197 15 173 A1 betrifft eine Schneckenpresse zum Abtrennen von Flüssigkeiten aus Feststoff-Flüssigkeits-Mischungen, insbesondere Faserstoffsuspensionen, mit einem mit Flüssigkeitsdurchtritten versehenen Mantel, der insbesondere in Segmente aufgeteilt ist, einer darin rotierenden Schnecke, einer vorzugsweise hohl ausgebildeten Welle und einem Suspensionszulaufbereich. Sie ist vornehmlich dadurch gekennzeichnet, daß der Suspensionszulaufbereich sich länglich in axialer Richtung am Schneckenmantel erstreckt.

Der steigende Anfall an Abwässern unterschiedlicher Provenienz erfordert anderseits Pressschneckenseparatoren mit erhöhter Durchsatzkapazität, anderenfalls eine - auch im Hinblick auf den Verbrauch an Primärenergie und Raumbedarf unerwünschte - Vervielfachung von bekannten Pressschneckenseparatoren mit eingeschränkter Durchsatzkapazität erforderlich wäre. Versuche haben gezeigt, dass mit einer blossen baulichen Vergrösserung der bekannten Pressschneckenseparatoren dieses Ziel nicht oder nicht in zufriedenstellendem Massen erreicht werden kann.

Der Erfindung liegt daher die Aufgabe zugrunde, einen Pressschneckenseparator der eingangs erwähnten Art zu schaffen, der bei einfachem, robusten Aufbau und nur wenig bzw. unproportional erhöhtem Energiebedarf eine vielfach grössere Durchsatzkapazität gegenüber bekannten Pressschneckenseparatoren ermöglicht. Damit soll der Pressschneckenseparator zur Verarbeitung von grossen Abwassermengen, wie sie z.B. bei der Papierherstellung anfallen, geeignet sein.

Diese Aufgabe wird erfindungsgemäss durch die Merkmale des Anspruchs 1 gelöst. Die Unteransprüche zeigen bevorzugt die Weiterbildungen der Erfindung.

Mit den erfindungsgemässen Massnahmen werden insbesondere die folgenden vorteilhaften Wirkungen gegenüber bekannten Pressschneckenseparatoren erzielt: Bei dem eingangs erwähnten bekannten Pressschneckenseparator ist ein Verhältnis der Stärke des Ringspaltes eines Ringraumes zwischen einem Siebkorb und einer Schneckenwelle und deren Durchmesser auf einen bestimmten niedrigen Wert festgelegt. Überraschend wurde im Rahmen der Erfindung gefunden, dass eine wesentliche Steigerung der Durchsatzleistung von einer Vergrösserung der Fläche des Siebkorbes am Ende der Schneckenwendeln abhängig ist. Dies kann dadurch erreicht werden, dass das besagte Verhältnis auf die im Anspruch 1 genannten Werte heraufgesetzt wird. Gleichzeitig wird dadurch eine Längen- und Durchmesserdimensionierung des Siebkorbes geschaffen, die eine hochpräzise Fertigung dieses fertigungsempfindlichen Bauteils bei vergleichsweise geringem Fertigungsaufwand und geringen Kosten ermöglicht. Der Bedarf an Primärenergie des erfindungsgemässen Pressschneckenseparators im Vergleich zu einer eine ebensolche Durchsatzleistung schaffenden Vielzahl bekannter Pressschneckenseparatoren ist deutlich geringer. Die Abscheidungswirkung im Ringraum wird gemäss einer Weiterbildung der Erfindung dadurch unterstützt, dass dass der Feststoffauslass des Separators durch eine unter einer in Ausstossrichtung wirkenden bestimmten axialen Kraft wegschwenkbaren Stauklappenanordnung verschliessbar ist. Dies führt zu einer Verdichtung des Feststoffpfropfens und damit verbesserten Entwässerung. Ebenso in diesem Sinne wirksam ist eine andere Weiterbildung der Erfindung, wonach die Mittenlängsachse des Presschneckenseparators vertikal oder gegenüber der Horizontalen geneigt ausgerichtet sein kann, um eine Materialförderung gegen die Schwerkraftwirkung zu schaffen.

Die Erfindung wird nachfolgend anhand einer Ausführungsform und der Zeichnung näher erläutert. Es zeigen:
Fig. 1 In teilweiser geschnittener Ansicht einen Pressschneckenseparator mit vertikal ausgerichteter Mittenlängsachse gemäss einer Ausführungsform der Erfindung,
Fig. 2 den in Fig. 1 gezeigten Pressschneckenseparator in einer geschnittenen Seitenansicht,
Fig. 3 eine Draufsicht auf den Pressschneckenseparator nach Fig. 1,
Fig. 4 eine Draufsicht auf einen Pressschneckenseparator gemäss der Erfindung mit einer Stauklappenanordnung, und
Fig. 5 Detailansichten der Stauklappenanordnung nach Fig. 4.

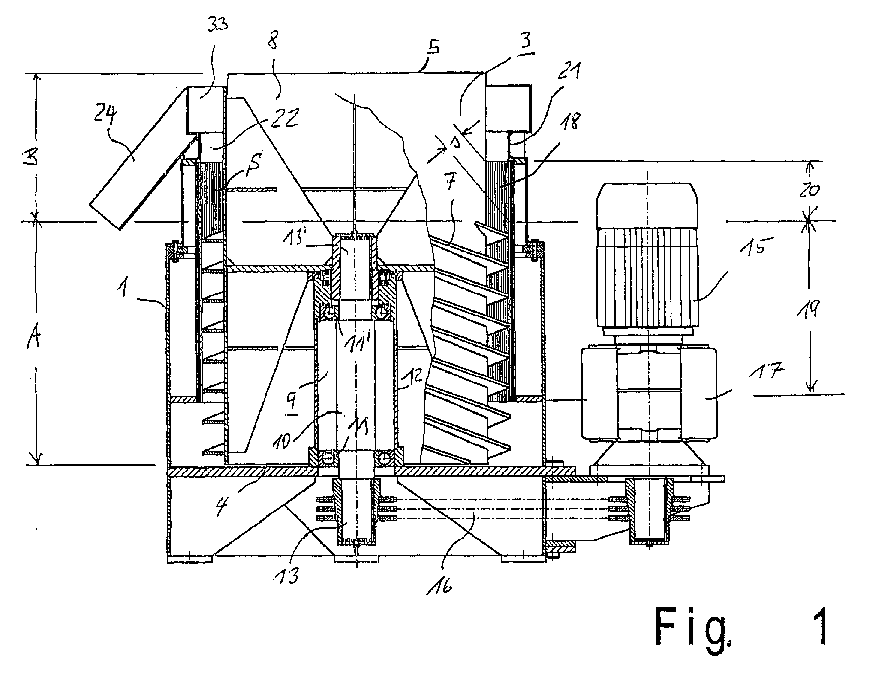

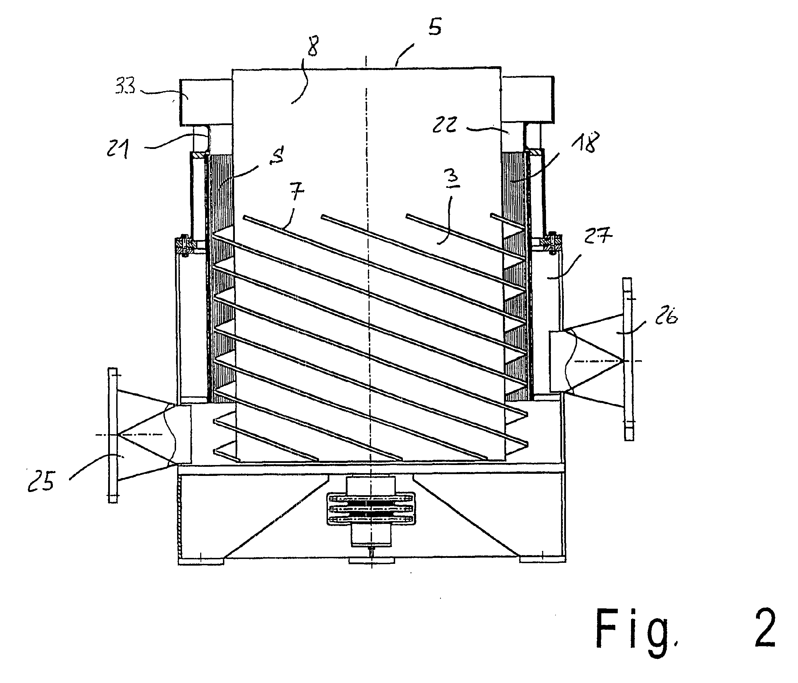

Mit Bezug auf Figuren 1 und 2 wird nachfolgend der grundsätzliche Aufbau eines Pressschneckenseparators gemäss der Erfindung erläutert.

Mit dem Bezugszeichen 1 ist ein Gehäuse gezeigt, das einen Innenraum definiert, in dem eine das allgemeine Bezugszeichen 3 aufweisende Förderschneckenanordnung vorgesehen ist, die ein inneres axiales Ende 4 und ein äusseres axiales Ende 5 aufweist. Das Gehäuse 1 ist bei der vorliegenden Ausführungsform der Erfindung eine Stahlschweisskonstruktion, jedoch könnte es auch eine Stahlgusskonstruktion sein.

Die Förderschneckenanordnung 3 umfasst einen anfänglichen oder inneren umfänglichen Bereich A, auf dem zwei oder mehrere Schneckenwendeln 7 zur gemeinsamen Drehung mit einer Schneckenwelle 8 angeordnet bzw. montiert sind, und einen äusseren Bereich B nahe dem anderen axialen Ende 5, der frei von Schneckenwendeln ist. Die Schneckenwelle 8 hat - wie dargestellt - eine radiale Abmessung, die zwischen dem inneren und äusseren axialen Ende 4, 5 unveränderlich ist. Vorzugsweise nimmt der Bereich A zwischen 60 und 80 % der Gesamtlänge der Schneckenwelle 3 ein, während deren Bereich B zwischen 20 und 40 % der Schneckenwellenlänge beträgt.

Mit dem allgemeinen Bezugszeichen 9 ist eine Antriebswellen- und Lageranordnung für die Schneckenwelle 8 gezeigt. Die Anordnung 9 umfasst eine Antriebswelle 10, die in geeigneter Weise, z.B., wie bei 11, 11'angedeutet ist, durch ein paar axial beabstandete Axial-Radial-Rollenlageranordnung in einem Lagergehäuse 12 ausgerichtet zur Mittenlängsachse der Schneckenwelle 8 drehbar gehalten ist. Die Antriebswelle 10 hat gegenüberliegende axiale Wellenstummel 13, 13', von denen einer in Antriebsverbindung mit der Schneckenwelle 8 steht, während der andere Wellenstummel aus der Schneckenwelle 8 axial herausragt und in antreibender Verbindung mit einer Antriebseinrichtung 15 in Gestalt eines Elektromotors steht. Obschon der Antrieb in verschiedener Weise ausgestaltet sein kann, ist vorzugsweise ein bei 16 angedeuteter Riemen- oder Kettentrieb vorgesehen, der eine Abtriebswelle der Antriebseinrichtung 15 mit dem betreffenden Wellenstummel 13 verbindet. Mit 17 ist ein Untersetzungsgetriebe 17 angdeutet, um die Drehzahl der Abtriebswelle auf ein geeignetes Mass in vorgegebenen Stufen oder kontinuierlich einstellen zu können. Die Erfindung ist nicht auf die beschriebene Antriebsanordnung beschränkt, sondern es könnte auch eine solche vorgesehen werden, wie sie z.B. in der EP 0 367 037 B1 beschrieben ist.

Im Gehäuseinnenraum ist ein zylinderförmiger Siebkorb 18 angeordnet. Der Siebkorb 18 hat vorzugsweise einen Aufbau, wie er mit näheren Details in der EP 0 367 037 B1 beschrieben ist, so dass hierauf Bezug genommen werden kann. Diese Druckschrift ist damit in die Offenbarung der vorliegenden Erfindung einbezogen. Der Siebkorb 18 ist demzufolge vorzugsweise als Spaltsieb ausgebildet, dessen Siebstäbe achsparallel verlaufen, wobei die Weite der Spalte zwischen den Siebstäben vorzugsweise zwischen 0,2 mm und 1,5 mm liegt.

Der Siebkorb 18 könnte längs seiner gesamten Länge gegenüber dem Gehäuse 1 "schwimmend" abgestützt sein, wie dies in der EP 0 367 037 B1 beschrieben ist. Vorzugsweise ist der Siebkorb 18 bei der vorliegenden Ausführungsform der Erfindung mit senkrecht ausgerichteter Mittenlängsachse nur an einem dem äusseren Ende 5 der Schneckenwelle 8 zugewandten Endbereich am Gehäuse 1 abgestützt, d.h. an einer Stelle, an der bei Betrieb die grössten Drehmomente auftreten.

Der Siebkorb 18 ist von der Förderschneckenanordnung 3 axial durchsetzt, wobei zwischen der Schneckenwelle 8 und dem inneren Umfang des Siebkorbs 18 ein kreiszylindrischer Ringraum S gebildet ist, der eine gleichförmige Spaltweite s hat, die in einem bestimmten Verhältnis zum Durchmesser der Schneckenwelle 8 steht.

Wie dargestellt, umfasst der Ringraum S einen ersten oder inneren Abschnitt 19, der dem inneren axialen Ende 4 der Schneckenwelle 8 zugewandt ist, und einen zweiten oder äusseren axialen Abschnitt 20, der dem äusseren axialen Ende 5 der Schnekkenwelle 8 zugewandt ist. Der zweite axiale Abschnitt 20 des Ringraumes S ist frei von Schneckenwendeln 7, während die Schneckenwendeln 7 im Bereich des ersten Abschnitts 19 mit ihren äusseren Kanten bis nahe an die innere Umfangsfläche des Siebkorbes 18 geführt sind.

Erfindungsgemäss beträgt das Verhältnis des Durchmessers der Schneckenwelle 8 zur Spaltweite s des Ringraums S zwischen 12 und 50, weiter vorzugsweise 25, und höchst vorzugsweise 12, und beträgt die Spaltweite s des Ringraumes S zwischen 25 und 100 mm, vorzugsweise 50 und 75 mm, höchst vorzugsweise 75 mm.

Das Verhältnis der Spaltweite s des Ringraumes S zum axialen Abstand zwischen benachbarten Schneckenwendeln kann ferner < 1,0 vorzugsweise zwischen 0,5 und 1 ,0 höchst vorzugsweise 0,75 betragen. Jede Schneckenwendel 7 sollte unter einem Winkel zwischen 70 ° und 80 ° gegenüber der Mittenlängsachse der Schneckenwelle 8 in deren Förderrichtung geneigt sein, wobei der Abstand zwischen benachbarten Schneckenwendeln 7 zwischen 80 und 120 mm betragen sollte.

An oder nahe bei dem axialen Ende des Gehäuseinnenraums, das dem äusseren axialen Ende 5 der Schneckenwelle 8 zugewandt ist, ist am Gehäuse 1 eine rohrförmige Verlängerung 21 axial fluchtend zum Ringraum S angeordnet. Zwischen der inneren Umfangsfläche der rohrförmigen Verlängerung 21 und der äusseren Umfangsfläche der Schneckenwelle 8 ist ein weiterer Ringraum 22 definiert, der eine axiale Fortsetzung des Ringraumes S darstellt, jedoch nicht durch den Siebkorb 18 umfänglich begrenzt ist.

Die Schneckenwelle 8 ist über den Ringraum 22 hinaus axial verlängert und trägt an ihrem herausragenden Ende ein oder mehrere, im vorliegenden Fall vier, in gleichem Winkelabstand voneinander angeordnete schaufelartige Elemente 23, die radial vom äusseren Umfang der Schneckenwelle 8 um ein geeignetes Mass abstehen und zusammen mit der Schneckenwelle 8 rotieren. Am Gehäuse 1 ist ein Feststoffauslass in Gestalt einer schräg nach aussen von oben nach unten weisenden Schütte 24 vorgesehen, deren Einlass so zu den rotierenden Schaufeln 23 ausgerichtet ist, dass die Schaufeln 23 an der Schütte 24 bei der Drehung der Schneckenwelle 8 vorbeigeführt werden und so von den Schaufeln 23 mitgenommenes Feststoffmaterial zu der Schütte 24 transportiert wird. Vorzugsweise erfährt der Pfropfen beim Austritt aus dem Ringraum 21 eine Entspannung in einer dem Ringraum 21 nachgeschalteten ringförmigen Entspannungskammer 33, die umfänglich der Schneckenwelle 8 nahe deren aus dem Gehäuse 1 herausragenden Ende 5 vorgesehen ist. Das Feststoffmaterial zerfällt aufgrund der Entspannung in ein krümeliges, rieselfähiges Material, das durch die Schaufeln 23 deren Schütte 24 zugeführt wird.

Weiter ist am Gehäuse 1 ein Einlassstutzen 25 für die zu behandelnde Trübe vorgesehen, um diese nahe dem inneren axialen Ende der Förderschneckenanordnung 3 zuzuführen, so dass die Trübe von dem Wendeln erfasst werden kann. Ein Auslassstutzen 26 ist ferner am Gehäuse 1 an einer Stelle in Ausrichtung zum Siebkorb 18 vorgesehen, um die am äusseren Umfang des Siebkorbes 18 austretende abgeschiedene Flüssigkeit nach aussen abführen zu können.

Die Arbeitsweise des wie vorbeschrieben ausgebildeten Pressschneckenseparators ist wie folgt:

Über den Einlassstutzen 25 ins Innere des Gehäuses 1 eingeführte Trübe gelangt in den Wirkbereich der Förderschneckenanordnung 3 und wird von den Schnekkenwendeln 7 entgegen der Schwerkraftwirkung in Förderrichtung in den ersten Abschnitt 19 des Ringraumes S gefördert, um eine anfängliche Abscheidung der flüssigen Phase der Trübe vorzunehmen. Die abgeschiedene flüssige Phase gelangt in eine äussere Sammelkammer 27 des Gehäuses 1 und von dort zum Auslassstutzen 26. Das schon teilweise entwässerte Material wird durch die Förderschneckenanordnung 3 in den zweiten Abschnitt 20 des Ringraumes S transportiert, der frei von Schneckenwendeln 7 ist. In Folge des nachdrängenden Materials bildet sich hier eine Art Pfropfen im Ringraums S, aus dem bei weiterer Verdichtung die noch vorhandenen wässrige Bestandteile ausgequetscht und durch den Siebkorb 18 nach aussen abgeführt wird. Der Pfropfen wird bei seiner Bewegung zum Ringraum 22 der rohrförmigen Verlängerung 21 daher zunehmend entwässert, so dass schliesslich am Auslass des Pressschnekkenseparators ein Pfropfen verbleibt, der im Wesentlichen aus Feststoff besteht. Sobald der Feststoffpfropfen in den Bereich der Schaufeln 23 gelangt, wird er durch diese in die Schütte 24 abgelenkt und kann von dort nach aussen zur weiteren Verwendung, z.B. Kompostierung, Einstreu bei Tierställen, oder Fermentation in Biogasgewinngsanlagen abgeführt werden.

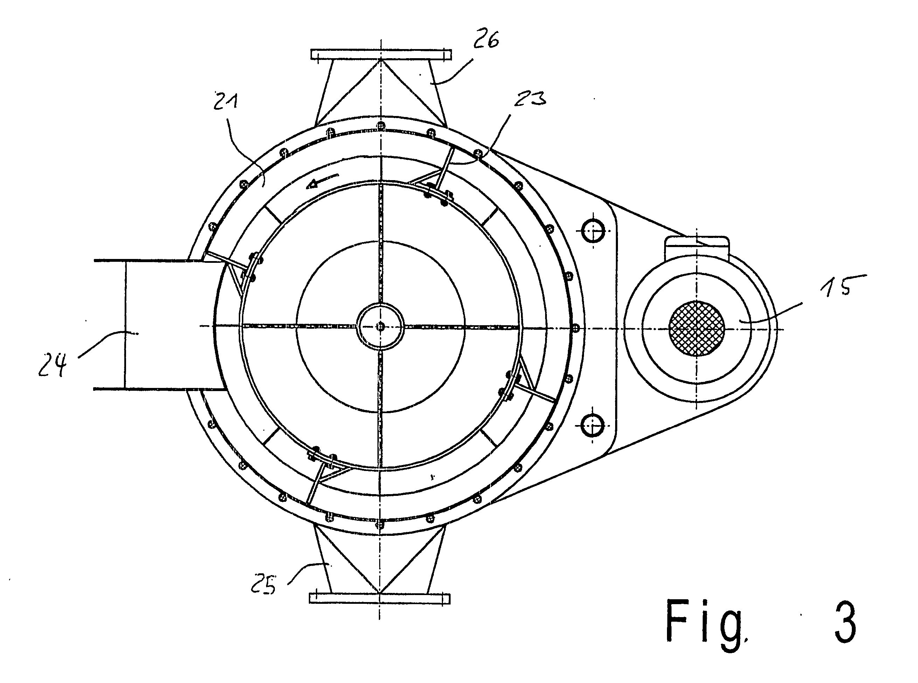

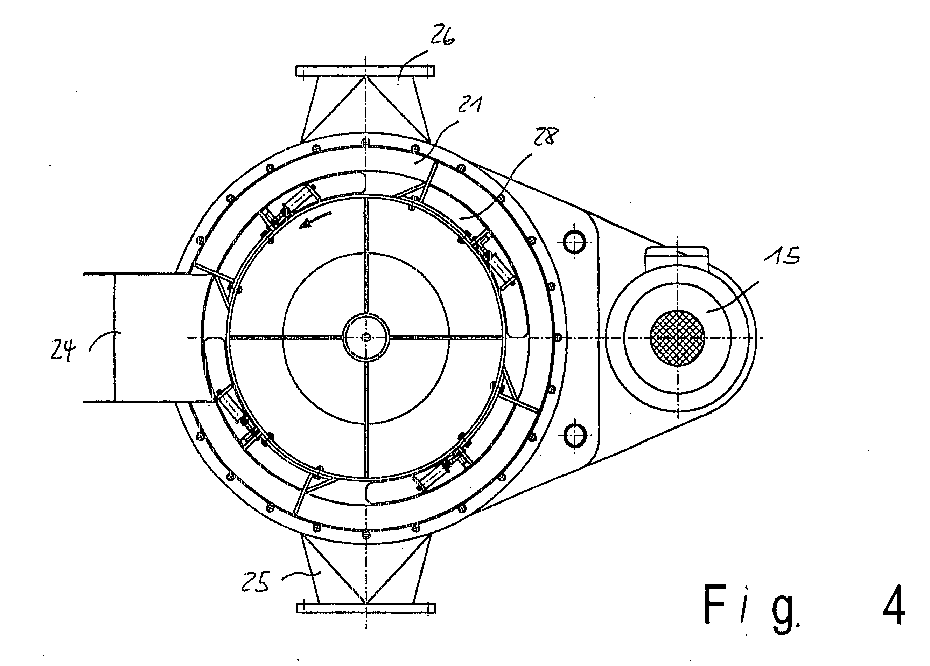

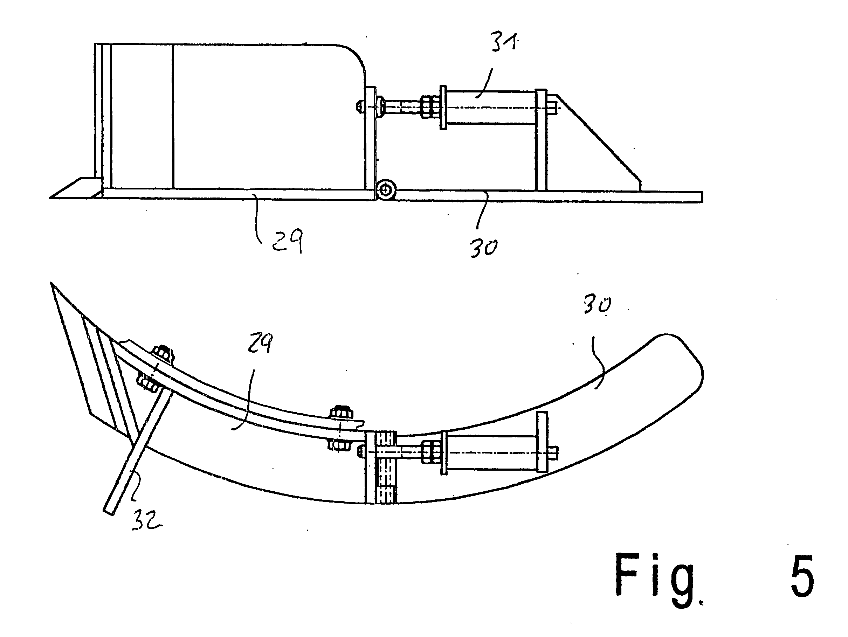

Die beschriebene Stauwirkung durch die Pfropfenbildung kann dadurch verstärkt werden, dass am Auslassende des Ringraumes 22 der rohrförmigen Verlängerung 21 um der Schneckenwelle 8 zur gemeinsamen Drehung damit eine Stauklappenanordnung 28 montiert ist, wie dies in Fig. 4 und 5 dargestellt ist. Die Anordnung 28 setzt sich vorzugsweise aus mehreren umfänglich in gleichem Winkelabstand voneinander hintereinander angeordneten kreissegmentförmigen Basiskörpern 29 zusammen, die den Ringraum 22 wenigstens teilweise radial überdecken. An jedem Basiskörper 29 ist eine Klappe 30 angelenkt. Jede Klappe 30 kann gegen eine darauf vom Feststoffpfropfen ausgeübte Vorspannkraft von einer Stellung, bei der sie im wesentlichen fluchtend zum Basiskörper 29 ausgerichtet ist, in eine Stellung bewegt werden, bei der Klappe 30 den dahinter liegenden Ringraum 22 mehr oder weniger freigibt. Die Vorspannkraft kann durch eine Federeinrichtung oder Hydraulikeinrichtung 31, vorzugsweise einstellbar, aufgebracht werden. Die Stauklappenanordnung 28 bewirkt, dass der dagegen geförderte Feststoffpfropfen nicht unmittelbar zur Schütte 24 gelangen kann, sondern erst dann, wenn der von ihm ausgeübte Druck ein solchen Mass angenommen hat, dass die Klappen 30 weggeschwenkt werden. Dies hat eine erhöhte Verdichtung und damit Entwässerung des Pfropfens zur Folge. Mit dem Bezugszeichen 32 sind schaufelartige Elemente bezeichnet, die eine Funktion ähnlich denjenigen der in Fig. 3 gezeigten Schaufeln 23 haben.

Die Erfindung wurde vorausgehend anhand einer Ausführungsform beschrieben, bei der die Förderschneckenanordnung vertikal ausgerichtet ist. Wenn erwünscht, könnte die Mittenlängsache der Förderschneckenanordnung auch um eine geeignetes Mass von ± 30° gegenüber der Senkrechten geneigt ausgerichtet sein. Auch kann eine waagrechte Ausrichtung der Förderschneckenanordnung bei gewissen zu behandelnden Trüben zu einem befriedigendem Abscheidungsverhalten führen. Die Stauklappenanordnung ist nicht auf die beschriebene Ausgestaltung beschränkt. Eine Stauklappenanordnung, wie sie z.B. in der koreanischen Patentschrift 0289887 beschrieben ist, könnte ebenfalls vorgesehen sein.

## Patentansprüche

1. Pressschneckenseparator zur Abscheidung fester Bestandteile aus einer feste und flüssige Bestandteile enthaltenden Trübe, wie Abwässer aus kommunalen, industriellen oder landwirtschaftlichen Betrieben, Gülle etc., aufweisend:
- ein Gehäuse (1),
- eine im Gehäuse drehbar angeordnete Förderschneckenanordnung (3), welche eine Schneckenwelle (8) und wenigstens zwei zur gemeinsamen Drehung mit der Schneckenwelle darauf angeordnete Schneckenwendeln (7) aufweist,
- einen Antrieb zur Drehung der Förderschneckenanordnung (3), einen im Gehäuse gehaltenen zylinderförmigen Siebkorb (18),
- einen zwischen der Innenseite des Siebkorbes und der Schneckenwelle definierten Ringraum (S), der einen ersten inneren axialen Abschnitt (19), in den die Schneckenwendeln hineinreichen, und einen zweiten äusseren axialen Abschnitt (20) aufweist, der frei von Schneckenwendeln ist,
- einen nahe einem inneren axialen Ende der Förderschneckenanordnung (3) angeordneten Einlass (25) für die Trübe,
- einen mit dem Siebkorb kommunizierenden Auslass (26) für die wässrigen Bestandteile der Trübe, und
- einen dem Ringraum in Förderrichtung nachgeordneten Feststoffauslass,
- wobei die Förderschneckenanordnung (3) einen ersten Bereich (A) umfasst, auf dem die Schneckenwendeln (8) angeordnet sind und einen zweiten Bereich (B) umfasst, der frei von Schneckenwendeln (8) ist, und wobei sich der erste Bereich (A) über den gesamten ersten inneren axialen Abschnitt (19) und der zweite Bereich (B) über den gesamten zweiten äusseren axialen Abschnitt (20) erstreckt, sodass im zweiten äusseren axialen Abschnitt (20) ein Pfropfen aus Feststoff ausbildbar ist,
- **dadurch gekennzeichnet, dass** das Verhältnis des Durchmessers der Schneckenwelle (8) zur Spaltweite (s) des Ringraumes (S) zwischen 12 und 50 liegt, und die Spaltweite (s) des Ringraumes (S) zwischen 25 und 100 mm beträgt.

2. Pressschneckenseparator nach Anspruch 1, **dadurch gekennzeichnet, dass** die Mittenlängsachse der Förderschneckenanordnung (3) unter einem Winkel von 90° +/-30° gegenüber der Horizontalen ausgerichtet ist.

3. Pressschneckenseparator nach Anspruch 1 oder 2, **dadurch gekennzeichnet, dass** das Verhältnis der Spaltweite (s) des Ringraumes (S) zum axialen Abstand zwischen benachbarten Schneckenwendeln (7) ≤ 1,0, vorzugsweise zwischen 0,5 und 1,0, höchst vorzugsweise 0,75 beträgt.

4. Pressschneckenseparator nach einem der vorhergehenden Ansprüche, **dadurch gekennzeichnet, dass** jede Schneckewendel (7) unter einem Winkel zwischen 70° und 80° gegenüber der Mittenlängsachse der Schneckenwelle (8) in Förderrichtung geneigt ist.

5. Pressschneckenseparator nach einem der vorhergehenden Ansprüche, **dadurch gekennzeichnet, dass** der Abstand zwischen benachbarten Schneckenwendeln (7) zwischen 80 und 120 mm beträgt.

6. Pressschneckenseparator nach einem der vorhergehenden Ansprüche, **dadurch gekennzeichnet, dass** am äusseren axialen Ende der Gehäuses (1) eine den Feststoffauslass aufweisende rohrförmige axiale Verlängerung (21) vorgesehen ist, in die sich die Schneckenwelle (8) hineinerstreckt.

7. Pressschneckenseparator nach einem der vorhergehenden Ansprüche, **dadurch gekennzeichnet, dass** auf einem aus dem Feststoffauslass herausragenden Endbereich der Schneckenwelle (8) wenigstens ein schaufelartiges Mitnehmerelement (23) zur gemeinsamen Drehung mit der Schneckenwelle montiert ist, um aus dem Feststoffauslass austretende Feststoffmasse in im wesentlicher tangentialer Richtung wegzufördern.

8. Pressschneckenseparator nach einem der vorhergehenden Ansprüche, **dadurch gekennzeichnet, dass** am Feststoffauslass eine die Schneckenwelle (8) umgebende Entspannungskammer (33) für den austretenden Feststoffpfropfen vorgesehen ist.

9. Pressschneckenseparator nach einem der vorhergehenden Ansprüche, **dadurch gekennzeichnet, dass** der Feststoffauslass durch eine unter einer in Ausstossrichtung wirkenden bestimmten axialen Kraft wegschwenkbaren Stauklappenanordnung (28) verschliessbar ist.

10. Pressschneckenseparator nach Anspruch 9, **dadurch gekennzeichnet, dass** die Stauklappenanordnung (28) eine Vielzahl von umfänglich verteilt auf dem herausragenden Endbereich der Schneckenwelle (8) zur gemeinsamen Drehung mit der Schneckenwelle angeordneten, einen Austossringraum (22) des Feststoffauslasses überdeckenden vorgespannten Stauklappen (30) umfasst.

## Claims

1. A press screw separator for separating out solid components of a turbid mixture containing solid and liquid components, such as waste water from communal, industrial, or agricultural operations, slurry, etc., comprising:
- a housing (1),
- a conveyor screw arrangement (3) rotatably arranged in the housing and having a screw shaft (8) and at least two screw flights (7) arranged on the screw shaft for rotating in unison therewith,
- a drive for rotating the conveyor screw arrangement (3), a cylinder-shaped sieve basket (18) held in the housing,
- a ring chamber (S) defined between the inner side of the sieve basket and the screw shaft, the chamber having a first inner axial section (19) into which the screw flights reach, and a second outer axial section (20) which is free of screw flights,
- an inlet (25) for the mixture, which is arranged near an inner axial end of the conveyor screw arrangement (3),
- an outlet (26) for the aqueous components of the mixture, which communicates with the sieve basket, and
- a solid outlet arranged downstream in the direction of conveyance from the ring chamber,
- wherein the conveyor screw arrangement (3) comprises a first portion (A) on which the screw flights (8) are arranged, and a second portion (B) which is free of screw flights (8), and wherein the first portion (A) extends over the whole first inner axial section (19) and the second portion (B) extends over the whole second outer axial section (20), so that a plug of solid can be formed in the second outer axial section (20),
- **characterized in that** the ratio of the diameter of the screw shaft (8) to the gap width (s) of the ring chamber (S) is between 12 and 50, and the gap width (s) of the ring chamber (S) is between 25 mm and 100 mm.

2. The press screw separator of claim 1, **characterized in that** a longitudinal center axis of the conveyor screw arrangement (3) is aligned by an angle of about 90° +/- 30° with respect to the horizontal.

3. The press screw separator of claim 1 or 2, **characterized in that** the ratio of the gap width (s) of the ring chamber (S) to the axial distance between adjacent screw flights (7) is ≤ 1.0, preferably between 0.5 and 1.0, most preferably 0.75.

4. The press screw separator of any of the preceding claims, **characterized in that** each screw flight (7) is inclined in the direction of conveyance by an angle between 70° and 80° with respect to the longitudinal center axis of the screw shaft (8).

5. The press screw separator of any of the preceding claims, **characterized in that** the distance between adjacent screw flights (7) is between 80 mm and 120 mm.

6. The press screw separator of any of the preceding claims, **characterized in that** a tubular axial extension (21) which comprises the solid outlet and into which the screw shaft (8) extends is provided on the outer axial end of the housing (1).

7. The press screw separator of any of the preceding claims, **characterized in that** at least one blade-shaped conveyor member (23) is mounted for rotating in unison with the screw shaft on an end portion of the screw shaft (8) projecting out of the solid outlet so as to convey solid matter exiting from the solid outlet away in a substantially tangential direction.

8. The press screw separator of any of the preceding claims, **characterized in that** a flash chamber (33) for the exiting solid plug, which surrounds the screw shaft (8), is provided at the solid outlet.

9. The press screw separator of any of the preceding claims, **characterized in that** the solid outlet is adapted to be closed by a holdup flap arrangement (28) that is pivotable under a specific axial force acting in the direction of discharge.

10. The press screw separator of claim 9, **characterized in that** the holdup flap arrangement (28) comprises a plurality of biased holdup flaps (30) that are arranged circumferentially distributed on the protruding end portion of the screw shaft (8) for rotating in unison with the screw shaft and cover a discharge ring chamber (22) of the solid outlet.

## Revendications

1. Séparateur à vis à pression pour la séparation de particules solides d'une eau trouble contenant des particules solides et liquides tels que des eaux usées communales, industrielles ou agricoles, du lisier, etc., présentant :
- un boîtier (1),
- un agencement de vis sans fin (3) disposé de manière à pouvoir tourner dans le boîtier, qui présente un arbre de vis (8) et au moins deux spires de vis (7) disposées dessus pour la rotation commune avec l'arbre de vis,
- un entraînement pour la rotation de l'agencement de vis sans fin (3), un panier de tamisage (18) cylindrique maintenu dans le boîtier,
- un espace annulaire (S) défini entre le côté intérieur du panier de tamisage et l'arbre de vis, qui présente une première section (19) axiale intérieure, dans laquelle parviennent les spires de vis, et une seconde section axiale extérieure (20) qui est exempte de spires de vis,
- une entrée (25) disposée près d'une extrémité axiale intérieure de l'agencement de vis sans fin (3) pour l'eau trouble,
- une sortie (26) communiquant avec le panier de tamisage pour les particules aqueuses de l'eau trouble, et
- une sortie de solides disposée en aval de l'espace annulaire dans le sens de transport,
- l'agencement de vis sans fin (3) comportant une première zone (A), sur laquelle sont disposées les spires de vis (8) et comportant une seconde zone (B) qui est exempte de spires de vis (8), et la première zone (A) s'étendant sur la première section axiale intérieure entière (19) et la seconde zone (B) sur la seconde section axiale extérieure entière (20) de sorte qu'un bouchon de solides puisse être réalisé dans la seconde section axiale extérieure (20),
- **caractérisé en ce que** le rapport entre le diamètre de l'arbre de vis (8) et la largeur de fente (s) de l'espace annulaire (S) est compris entre 12 et 50 et la largeur de fente (s) de l'espace annulaire (S) est comprise entre 25 et 100 mm.

2. Séparateur à vis à pression selon la revendication 1, **caractérisé en ce que** l'axe médian longitudinal de l'agencement de vis sans fin (3) est orienté selon un angle de 90° +/- 30° par rapport à l'horizontale.

3. Séparateur à vis à pression selon la revendication 1 ou 2, **caractérisé en ce que** le rapport de largeur de fente (s) de l'espace annulaire (S) par rapport à la distance axiale entre des spires de vis contiguës (7) est ≤ 1, de préférence est compris entre 0,5 et 1, de manière préférée entre toutes s'élève à 0,75.

4. Séparateur à vis à pression selon l'une quelconque des revendications précédentes, **caractérisé en ce que** chaque spire de vis (7) est inclinée selon un angle compris entre 70 et 80° par rapport à l'axe médian longitudinal de l'arbre de vis (8) dans le sens de transport.

5. Séparateur à vis à pression selon l'une quelconque des revendications précédentes, **caractérisé en ce que** la distance entre des spires de vis contiguës (7) est comprise entre 80 et 120 mm.

6. Séparateur à vis à pression selon l'une quelconque des revendications précédentes, **caractérisé en ce qu'**un prolongement (21) axial tubulaire présentant la sortie de solides est prévu sur l'extrémité axiale extérieure du boîtier (1), dans lequel l'arbre de vis (8) s'étend.

7. Séparateur à vis à pression selon l'une quelconque des revendications précédentes, **caractérisé en ce qu'**au moins un élément d'entraînement (23) de type pale est monté sur une zone d'extrémité dépassant de la sortie de solides de l'arbre de vis (8) pour la rotation commune avec l'arbre de vis afin d'évacuer une masse de solides sortant de la sortie de solides dans la direction sensiblement tangentielle.

8. Séparateur à vis à pression selon l'une quelconque des revendications précédentes, **caractérisé en ce qu'**une chambre de détente (33) entourant l'arbre de vis (8) pour le bouchon de solides sortant est prévue sur la sortie de solides.

9. Séparateur à vis à pression selon l'une quelconque des revendications précédentes, **caractérisé en ce que** la sortie de solides peut être fermée par un agencement de clapets de retenue (28) pouvant pivoter sous une force axiale déterminée agissant dans le sens de rejet.

10. Séparateur à vis à pression selon la revendication 9, **caractérisé en ce que** l'agencement de clapets de retenue (28) comporte une pluralité de clapets de retenue (30) précontraints recouvrant un espace annulaire de rejet (22) de la sortie de solides, répartis sur la périphérie de la zone d'extrémité en saillie de l'arbre de vis (8) pour la rotation commune avec l'arbre de vis.
